# FASCICULE DE BREVET EUROPEEN

(11) **EP 2 929 987 B1**
(45) Date de publication et mention de la délivrance du brevet: **01.03.2017**
(21) Numéro de dépôt: 15159384.5
(22) Date de dépôt: 17.03.2015
(51) Int. Cl.: B25H 1/16

(54) **Etabli de travail pour des batteries electrochimiques, comportant un bac à eau disposé en-dessous**
Werkbank für elektrochemische Batterien, die einen darunter angebrachten Wasserkasten umfasst
Workbench for electrochemical batteries, comprising a water tray arranged below same

(30) Priorité: 08.04.2014 FR 1453089
(43) Date de publication de la demande: 14.10.2015
(73) Titulaire: PEUGEOT CITROËN AUTOMOBILES SA, 78140 Vélizy-Villacoublay (FR)
(72) Inventeur: Cheau, Chakara, 92350 LE PLESSIS ROBINSON (FR); Poujade, Christian, 75011 PARIS (FR); Lebeau, Jerôme, 91090 LISSES (FR); Astoul, Philippe, 77760 LA CHAPELLE LA REINE (FR); Soudee,Guillame, 78120 RAMBOUILLET (FR)

(56) Documents cités:
- GB-A- 675 002
- US-A- 4 119 044

## Description

La présente invention concerne un établi de travail prévu pour recevoir des batteries électrochimiques.

Les véhicules hybrides ou électriques comportent pour la traction des accumulateurs d'énergie comprenant des cellules électrochimiques, appelées par la suite batteries, qui peuvent être réalisées suivant différentes technologies connues.

Les batteries permettent notamment de récupérer une énergie produite lors des freinages du véhicule, pour délivrer par la suite un courant à un moteur électrique de traction. Sur certains véhicules, les batteries peuvent aussi être rechargées directement à partir d'un réseau extérieur de distribution d'électricité.

Suivant la technologie de batterie utilisée, en particulier pour les cellules électrochimiques au lithium-ion disposant d'une forte densité d'énergie par rapport à la masse, ces cellules présentent un risque de court-circuit interne en cas d'erreur de manipulation de différentes natures. On peut obtenir notamment un court-circuit interne avec un objet électriquement conducteur, une surcharge par un appareil défectueux, une chute accidentelle, un percement accidentel de la paroi externe.

Ce court-circuit peut engendrer un emballement thermique qui se traduit par une forte élévation de la température. Les cellules électrochimiques peuvent émettre dans ce cas des liquides ou des gaz chauds sous pression, qui sont toxiques et inflammables. Il y a alors un risque de départ d'incendie.

Par ailleurs pour effectuer des opérations sur ce type de batterie, notamment des tests, de la maintenance ou des réparations, réalisées par exemple au bureau d'études du constructeur automobile, ou dans les ateliers de montage ou d'entretien des véhicules, on dépose ces batteries sur un établi afin de les installer à une hauteur convenable facilitant le travail d'un opérateur.

On notera que ce type de batterie comporte généralement un volume et une masse importante. Elles nécessitent alors des moyens de levage, et ne peuvent pas être manoeuvrées rapidement et facilement.

Il est connu de prévoir à proximité du poste de travail des moyens de lutte contre le feu permettant d'intervenir en cas de départ d'incendie sur la batterie, comme un extincteur à gaz carbonique, une lance à eau appelée « Robinet d'Incendie Armé », ou des buses d'aspersion automatique d'eau installées au plafond, appelées « sprinklers ».

En cas d'emballement thermique qui échauffe fortement une masse importante de la batterie, ces différentes solutions d'aspersion permettent d'attaquer un feu naissant en empêchant son extension. Toutefois elles ne permettent pas de contenir l'incendie sur la durée, et de rendre la batterie électriquement inerte.

On peut aussi prévoir à proximité du poste de travail une piscine remplie d'eau. Il faut alors déplacer la batterie pour la plonger dedans, en prévoyant des moyens de manutention, ce qui n'est pas toujours très rapide à réaliser, et sûr pour l'opérateur en cas d'incendie dégageant des gaz toxiques. De plus cette installation est encombrante et onéreuse.

Par ailleurs le poste de travail peut être clos, entouré de cloisons et de portes coupe-feu. Cependant si l'incendie peut être confiné, des moyens d'extinction rapide sont quand même à prévoir.

Le document US-A-4119044 divulgue un établi de travail adapté pour des batteries électrochimiques, comportant un plan de travail qui est prévu pour recevoir la batterie, et un bac adapté à contenir de l'eau disposé en dessous du plan de travail, et des moyens de descente de ce plan.

L'idée de refroidir rapidement un objet en l'immergent dans un bac à eau et un dispositif à cet effet sont connus de GB-A-675002.

La présente invention a notamment pour but d'éviter ces inconvénients de la technique antérieure.

Elle propose à cet effet un établi de travail pour des batteries électrochimiques, comportant un plan de travail isolé électriquement qui est prévu pour recevoir la batterie, caractérisé en ce qu'il comporte un bac à eau disposé en-dessous du plan de travail, et des moyens de descente de ce plan dans le bac.

Un avantage de cet établi de travail est que d'une part on peut travailler normalement sur la batterie en disposant le plan de travail à une hauteur adaptée pour les interventions des opérateurs, et d'autre part sur une simple commande disposée sur le poste ou actionnée à distance, on peut très rapidement plonger la batterie entièrement dans l'eau par la descente du plan de travail, ce qui la refroidit de manière efficace, évite tout départ d'incendie, et la décharge électriquement jusqu'à ce qu'elle ne présente plus de risque électrique.

L'opérateur peut après la commande s'éloigner très vite du poste de travail, et déclencher la ventilation du local de travail, ce qui assure la sécurité des personnes.

L'établi de travail selon l'invention peut de plus comporter une ou plusieurs des caractéristiques suivantes, qui peuvent être combinées entre elles.

Avantageusement, les moyens de descente du plan de travail dans le bac comportent un mécanisme d'actionnement motorisé.

Dans ce cas, l'établi comporte avantageusement une réserve d'énergie autonome permettant au moins une manoeuvre du mécanisme d'actionnement motorisé pour réaliser une descente du plan de travail, en cas d'absence d'alimentation extérieure d'énergie.

Avantageusement, la vitesse de descente du plan de travail est contrôlée par le mécanisme d'actionnement motorisé.

Avantageusement, le mécanisme d'actionnement motorisé réalise aussi la remontée du plan de travail.

Avantageusement, le plan de travail est maintenu à la hauteur de travail par des verrous.

Avantageusement, l'établi de travail comporte une commande déportée de descente du plan de travail, permettant de commander à distance la descente de ce plan.

En particulier, le plan de travail peut être formé par un caillebotis isolé électriquement.

Avantageusement, l'établi de travail comporte un grillage fixé sous le caillebotis.

Avantageusement, le caillebotis comporte une surface en matière plastique moulée, renforcée pas une structure métallique.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est une vue d'un établi de travail selon l'invention, le plan de travail étant dans sa position normale prévue pour les interventions sur les batteries ; et
- la figure 2 est une vue de cet établi après une descente du plan de travail.

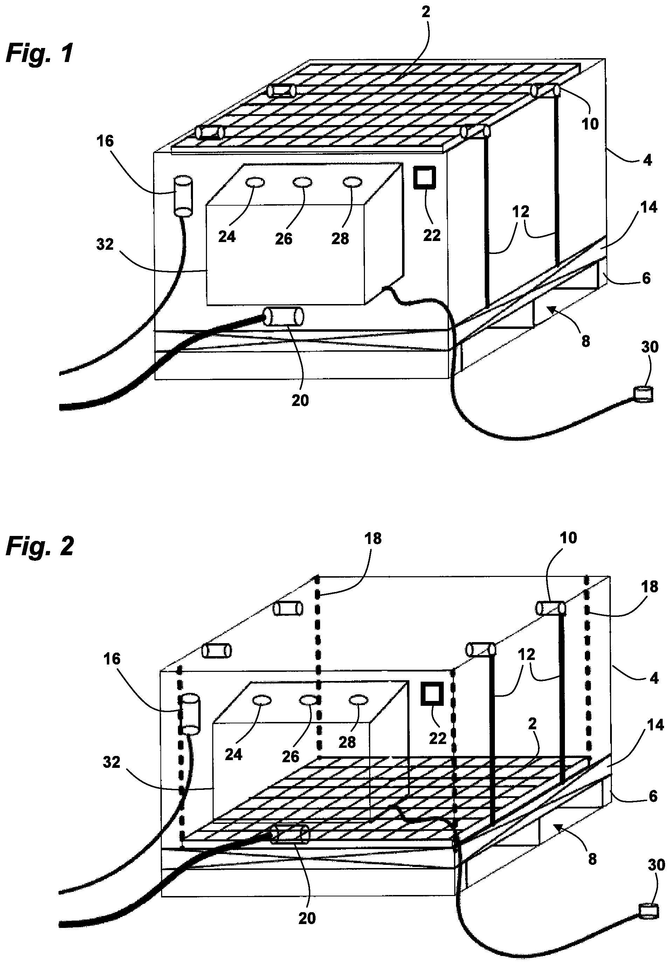

Les figures 1 et 2 présentent un caillebotis 2 formant un plan de travail isolé électriquement pour une tension de 500V, qui peut être notamment en polypropylène renforcé en-dessous par un cadre métallique pour obtenir l'isolation et la rigidité, ou en bois. Un grillage comportant des mailles de 5mm² est fixé sous le caillebotis 2, pour récupérer des petites pièces qui tomberaient sur ce caillebotis sans les perdre en-dessous.

En particulier le caillebotis 2 peut être dimensionné pour supporter des batteries de dimension maximale de 950 par 1450mm, comportant une masse de 250kg, ce qui permet de répondre à la plupart des besoins des véhicules électriques et hybrides.

Le caillebotis 2 est maintenu par quatre verrous 10 au niveau supérieur d'un bac à eau 4 de forme parallélépipédique, isolé électriquement, qui est posé sur un socle 6 comportant deux passages latéraux 8 permettant l'insertion des bras d'un chariot élévateur pour assurer un déplacement de l'ensemble du poste de travail.

Le socle 6 comportant une structure métallique prévue pour supporter une masse de 1000kg, donne de la rigidité au bac à eau 4. Ce socle 6 dispose de quatre crochets non représentés, permettant un levage de l'ensemble.

Le bac à eau 4 peut être avantageusement réalisé de manière économique en polypropylène, matière qui conserve ses caractéristiques mécaniques jusqu'à une température de 80°C. Le bac à eau 4 comporte aussi quatre crochets de levage non représentés, qui permettent de le soulever à vide pour le sortir de son socle 6.

Le bac à eau 4 comporte une vanne manuelle d'entrée et de sortie de l'eau 20, reliée par une canalisation extérieure à une alimentation ou à un égout, qui permet le remplissage ou la vidange de ce bac. Une sonde de température plongée dans l'eau du bac 4 mesure la température de cette eau, qui est indiquée sur un affichage en façade 22.

Le plan de travail formé par la surface du caillebotis 2 est avantageusement disposé à une hauteur de 950mm, qui permet à un opérateur d'intervenir facilement et de manière ergonomique sur une batterie posée dessus.

Un espace intermédiaire 14 entre le socle 6 et le bac à eau 4 reçoit un mécanisme d'actionnement pneumatique, alimenté à une pression de 6 bars minimum par une canalisation extérieure reliée à une entrée 16 comportant un manomètre indiquant la pression du circuit d'alimentation.

Le poste de travail comporte après l'entrée 16 un clapet anti-retour maintenant la pression d'air à l'intérieur, puis un accumulateur de pression permettant en cas de coupure de l'alimentation extérieure, de stocker 25 litres d'air à une pression minimale de 5 bars pendant au moins 8 heures.

Le mécanisme d'actionnement comporte des vérins pneumatiques agissants sur des câbles 18, qui permettent à partir d'une commande de descente d'ouvrir les verrous 10 afin de descendre le caillebotis 2 en laissant filer les câbles de manière contrôlée, et à partir d'une commande de montée de tirer sur ces câbles pour remonter ce caillebotis.

Un pupitre de commande 32 sur la façade avant du bac à eau 4 comporte un indicateur de la pression d'air interne 24 dans le poste de travail, une commande de montée du caillebotis 26 et une commande de descente de ce caillebotis 28. Une commande déportée de descente 30 du caillebotis 2, permet de commander à distance la descente de ce caillebotis.

Les commandes 26, 28, 30 sont reliées par des tuyaux à un distributeur d'air situé dans le pupitre 32, qui est lui-même relié par des tuyaux 12 aux quatre verrous 10, ce qui lui permet de piloter l'ouverture ou la fermeture de ces verrous en fonction de la commande.

En variante la commande déportée 30 peut être reliée au poste de travail par un moyen de communication sans fil ni tuyau.

Le fonctionnement du poste de travail est le suivant. Après la dépose de la batterie sur le caillebotis 2 par un moyen de manutention extérieur, l'opérateur peut travailler à une hauteur convenable sur cette batterie.

Dans le cas où un échauffement anormal se déclare dans les cellules électrochimiques de la batterie, avec un risque d'incendie, ou dans le cas d'un départ d'incendie, l'opérateur devant le poste actionne la commande de descente 28 du pupitre 32, ou un opérateur éloigné actionne la commande déportée 30.

En variante une commande automatique détectant de manière autonome par des capteurs un échauffement trop important de la batterie, ou un départ de feu, peut être installée pour commander de manière automatique la descente du caillebottis 2. On assure ainsi la sécurité même en l'absence de personnel sur place.

La vitesse de descente du caillebottis 2 est contrôlée à vide comme en charge, par le mécanisme d'actionnement pneumatique qui laisse filer les câbles 18 à une vitesse maîtrisée afin d'obtenir une descente dans l'eau avec un temps inférieur à une minute.

Grâce à la réserve d'air comprimé interne au poste de travail, on dispose ainsi de manière autonome d'une énergie pneumatique qui permet de réaliser même en cas de coupure de l'alimentation extérieure, une descente contrôlée de la batterie dans l'eau afin d'assurer la sécurité dans tous les cas.

Le volume d'eau résidant dans le bac à eau 4 est prévu pour refroidir suffisamment les batteries comportant une masse importante qui a atteint une température élevée. En pratique on peut prévoir un volume d'eau d'environ 700litres. Le bac à eau 4 comporte sur le côté opposé au pupitre, un indicateur de niveau d'eau.

Le mécanisme d'actionnement pneumatique assure aussi par ses vérins la remontée du caillebottis 2 après une action sur la commande de montée 26, ce qui permet de remettre facilement et sans effort le poste de travail dans sa configuration d'origine.

On obtient ainsi un poste de travail ergonomique, disposant d'un encombrement réduit, qui permet d'assurer la sécurité pour le travail sur des batteries électrochimiques comportant des risques d'inflammation, en particulier des batteries au lithium-ion. On notera que l'environnement du poste de travail comprenant le local d'implantation, ne nécessite aucune adaptation particulière pour assurer cette sécurité.

En variante l'eau dans le bac 4 peut être contenue dans une poche étanche disposée au fond de ce bac, qui est percée lors du déclenchement de la descente du caillebotis 2. Cette poche permet de conserver la réserve d'eau de manière séparée et protégée pendant toute la période d'inutilisation, ce qui évite de la polluer, et empêche son évaporation.

On peut aussi en variante disposer des verrous 10 de maintien du caillebotis 2 qui sont actionnés manuellement par un opérateur pour commander la descente de ce caillebotis. La remontée du caillebotis 2 se fait alors aussi de manière manuelle. On obtient ainsi un poste de travail qui n'utilise pas de source d'énergie extérieure.

La descente du caillebottis 2 peut alors être contrôlée par un dispositif de freinage entièrement mécanique, avec des butées élastiques, ou des vérins de fin de course disposés au fond du bac 4 pour son arrêt.

Suivant une autre variante, la réserve d'énergie pneumatique est une bombonne d'air comprimé à usage unique. La durée de maintien de la réserve d'air à la pression de 6 bars est ainsi prolongée de plus d'un an. Le poste de travail peut s'utiliser de façon autonome, sans apport d'énergie pneumatique extérieure.

En cas d'emballement thermique de la batterie, l'opérateur percute la bombonne pour libérer l'air dans le circuit pneumatique. Les commandes de descente 28, 30 permettent alors de descendre le caillebottis 2 au fond du bac.

Un branchement à une source d'énergie extérieure permet par la suite de remonter le caillebottis 2 avec la commande 26. Pour remettre l'établi de travail dans son état initial de fonctionnement, il suffit ensuite de remplacer la bombonne utilisée par une bombonne neuve.

Suivant une autre variante on peut utiliser un système de commande électromécanique à la place du système pneumatique, qui réalise les mêmes fonctions. Dans ce cas on peut aussi prévoir une réserve d'énergie électrique autonome dans le poste de travail, sous forme d'un accumulateur électrique, afin d'assurer la sécurité même en cas de coupure de l'alimentation extérieure.

## Revendications

1. Etabli de travail pour des batteries électrochimiques, comportant un plan de travail (2) isolé électriquement qui est prévu pour recevoir la batterie, **caractérisé en ce qu'**il comporte un bac à eau (4) disposé en dessous du plan de travail (2), et des moyens de descente de ce plan dans le bac.

2. Etabli de travail selon la revendication 1, **caractérisé en ce que** les moyens de descente du plan de travail (2) dans le bac comportent un mécanisme d'actionnement motorisé.

3. Etabli de travail selon la revendication 2, **caractérisé en ce qu'**il comporte une réserve d'énergie autonome permettant au moins une manoeuvre du mécanisme d'actionnement motorisé pour réaliser une descente du plan de travail (2), en cas d'absence d'alimentation extérieure d'énergie.

4. Etabli de travail selon la revendication 2 ou 3, **caractérisé en ce que** la vitesse de descente du plan de travail (2) est contrôlée par le mécanisme d'actionnement motorisé.

5. Etabli de travail selon l'une quelconque des revendications 2 à 4, **caractérisé en ce que** le mécanisme d'actionnement motorisé réalise aussi la remontée du plan de travail (2).

6. Etabli de travail selon l'une quelconque des revendications précédentes, **caractérisé en ce que** le plan de travail (2) est maintenu à la hauteur de travail par des verrous (10).

7. Etabli de travail selon l'une quelconque des revendications précédentes, **caractérisé en ce qu'**il comporte une commande déportée (30) de descente du plan de travail (2), permettant de commander à distance la descente de ce plan.

8. Etabli de travail selon l'une quelconque des revendications précédentes, **caractérisé en ce que** le plan de travail est formé par un caillebotis (2) isolé électriquement.

9. Etabli de travail selon la revendication 8, **caractérisé en ce qu'**il comporte un grillage fixé sous le caillebotis (2).

10. Etabli de travail selon la revendication 8 ou 9, **caractérisé en ce que** le caillebotis (2) comporte une surface en matière plastique moulée, renforcée par une structure métallique.

## Patentansprüche

1. Werkbank für elektrochemische Batterien, eine elektrisch isolierte Arbeitsplatte (2) umfassend, die zur Aufnahme der Batterie vorgesehen ist, **dadurch gekennzeichnet, dass** sie einen Wasserbehälter (4) umfasst, der unterhalb der Arbeitsplatte (2) angeordnet ist, sowie Mittel zum Absenken dieser Platte in den Behälter.

2. Werkbank nach Anspruch 1, **dadurch gekennzeichnet, dass** die Mittel zum Absenken der Arbeitsplatte (2) in den Behälter einen motorisierten Betätigungsmechanismus umfassen.

3. Werkbank nach Anspruch 2, **dadurch gekennzeichnet, dass** sie einen autonomen Energiespeicher umfasst, der zumindest eine Betätigung des motorisierten Betätigungsmechanismus ermöglicht, um ein Absenken der Arbeitsplatte (2) durchzuführen, wenn keine externe Energieversorgung vorhanden ist.

4. Werkbank nach Anspruch 2 oder 3, **dadurch gekennzeichnet, dass** die Absenkgeschwindigkeit der Arbeitsplatte (2) durch den motorisierten Betätigungsmechanismus gesteuert wird.

5. Werkbank nach irgendeinem der Ansprüche 2 bis 4, **dadurch gekennzeichnet, dass** der motorisierte Betätigungsmechanismus auch das Anheben der Arbeitsplatte (2) durchführt.

6. Werkbank nach irgendeinem der vorhergehenden Ansprüche, **dadurch gekennzeichnet, dass** die Arbeitsplatte (2) durch Riegel (10) auf Arbeitshöhe gehalten wird.

7. Werkbank nach irgendeinem der vorhergehenden Ansprüche, **dadurch gekennzeichnet, dass** sie eine Fernsteuerung (30) zum Absenken der Arbeitsplatte (2) umfasst, mit der das Absenken dieser Platte aus der Ferne gesteuert werden kann.

8. Werkbank nach irgendeinem der vorhergehenden Ansprüche, **dadurch gekennzeichnet, dass** die Arbeitsplatte durch einen elektrisch isolierten Gitterrost (2) gebildet wird.

9. Werkbank nach Anspruch 8, **dadurch gekennzeichnet, dass** sie ein Gitter umfasst, das unter dem Gitterrost (2) befestigt ist.

10. Werkbank nach Anspruch 8 oder 9, **dadurch gekennzeichnet, dass** der Gitterrost (2) eine Oberfläche aus geformtem Kunststoff umfasst, die durch eine Metallstruktur verstärkt ist.

## Claims

1. Workbench for electrochemical batteries, comprising an electrically insulated work surface (2) that is designed to receive the battery, **characterised in that** it comprises a water tank (4) disposed under the work surface (2), and means for lowering this surface into the tank.

2. Workbench according to claim 1, **characterised in that** the means for lowering the work surface (2) into the tank comprise a motorised actuation mechanism.

3. Workbench according to claim 2, **characterised in that** it comprises a self-contained energy reserve allowing at least one manoeuvre of the motorised actuation mechanism to effect a lowering of the work surface (2) in the event of absence of an external energy supply.

4. Workbench according to claim 2 or 3, **characterised in that** the speed of lowering of the work surface (2) is controlled by the motorised actuation mechanism.

5. Workbench according to any of claims 2 to 4, **characterised in that** the motorised actuation mechanism also effects the raising of the work surface (2).

6. Workbench according to any of the preceding claims, **characterised in that** the work surface (2) is maintained at the working height by bolts (10).

7. Workbench according to any of the preceding claims, **characterised in that** it comprises an offset control (30) for lowering the work surface (2), making it possible to control the lowering of this surface remotely.

8. Workbench according to any of the preceding claims, **characterised in that** the work surface is formed by an electrically insulated grating (2).

9. Workbench according to claim 8, **characterised in that** it comprises a grille fixed under the grating (2).

10. Workbench according to claim 8 or 9, **characterised in that** the grating (2) comprises a surface made from moulded plastics material reinforced by a metal structure.
